# EUROPEAN PATENT APPLICATION

(11) **EP 1 521 163 A2**
(43) Date of publication of application: **06.04.2005**
(21) Application number: 04021246.6
(22) Date of filing: 07.09.2004
(51) Int. Cl.: G06F 1/16

(54) **An electronic apparatus with a leg**

(30) Priority: 30.09.2003 JP 2003339986
(71) Applicant: Kabushiki Kaisha Toshiba, Tokyo 105-8001 (JP)
(72) Inventor: Tsuji, Hiroyuki, Tokyo 105-8001 (JP); Araki, Satoshi, Tokyo 105-8001 (JP)
(74) Representative: Henkel, Feiler & Hänzel

(57) **Abstract**

An electronic apparatus (1) includes a display (3) that is used both in a horizontal direction and a vertical direction, and a main unit (2) coupled to the display (3), which includes a bottom wall (5a). The apparatus (1) also includes a first tilt leg (28) fixed to the bottom wall (5a), and a second tilt leg (29) that is pivotally supported by the bottom wall (5a) between a use position protruded from the bottom wall (5a) and a storage position stored in the bottom wall (5a). The position of the first tilt leg (28) is eccentric to a rear side when the display (3) is used in the horizontal direction, and the second tilt leg (29) protruded makes the rear portion of the display (3) in the vertical direction high.

## Description

This invention relates to a portable electronic apparatus capable of changing a display direction in a posture in which a display is used in a horizontal direction and a vertical direction.

Previously, portable computers have been marketed with a display unit that may be reversed at 180 degrees. Supported by the main unit via a horizontal first axis, the display unit is rotational between a closed position at which the display unit lies down on the main unit and an open position at which the display unit is erected relevant to the main unit. Further, the display unit is supported to be reversible at 180 degrees at the main unit via a second axis orthogonal to the first axis.

Thus, when the display unit at the open position is fallen down to the closed position after reversed at 180 degrees around the second axis, the display unit lies down on the main unit in a posture in which the display screen compatible with an input wall is set upwardly. Therefore, input operation can be performed by touching the display screen by a stylus pen.

Japanese Patent Application Publication (KOKAI) No. 11-39058 (hereinafter "first reference") discloses such an electronic apparatus.

On the other hand, an electronic apparatus such as a personal computer comprises a tilt leg. The tilt leg that Japanese Patent Application Publication (KOKAI) No. 2003-216278 (hereinafter "second reference") discloses is supported at the rear end portion of the main unit. Also, that is rotational between a use position protruded from a bottom wall of the main unit and a storage position stored in the main unit so as to be retracted from the bottom wall. For example, when the electronic apparatus is used for placement on a desk, if the tilt leg is turned to the use position, the main unit is tilted in a posture in which the frontal side of the main unit is lowered. Therefore, a keyboard on a top wall of the main unit can be easily visualized, and operability becomes improved.

In the electronic apparatus disclosed in the first reference, when input operation is executed by using the stylus pen, there are a case in which a display screen is set in a horizontal direction; and a case in which the display screen is turned at 90 degrees to be set in a vertical direction.

In addition, according to the electronic apparatus disclosed in the second reference, the tilt leg set at the main unit is intended to tilt the main unit when the keyboard is used, and there is no intention that the orientation of a display screen is changed according to a use mode of the electronic apparatus, unlike in the above the first reference.

In other words, the tilt leg is set only at the rear end portion of the main unit, and thus, the tilt direction of the main unit is limited to one direction. Thus, there is no consideration and/or no suggestion to tilt the display according to the orientation of the display even though where the tilt leg of the second reference is applied to a portable electronic apparatus such that a display screen is used in a horizontal direction or a vertical direction.

An object of this present invention to provide an electronic apparatus in which, even if a display is set in any posture in which it is set in a horizontal direction or a vertical direction, a main unit can be tilted in a direction in which a frontal side of the display is lowered; and visualization of the display is improved.

According to an embodiment of the present invention, there is provided an electronic apparatus comprises; a display that is used both in a horizontal direction and a vertical direction, and a main unit coupled to the display, which includes a bottom wall. The apparatus also includes a first tilt leg fixed to the bottom wall, and a second tilt leg that is pivotally coupled to the bottom wall for usage between a use position protruded from the bottom wall and a storage position stored in the bottom wall. The position of the first tilt leg is eccentric to a rear side when the display is used in the horizontal direction, and second tilt leg protruded makes the rear portion of the display in the vertical direction higher than a frontal portion of the display.

The first tilt leg and the second tilt leg can be selectively used according to the orientation of the display. Thus, the'main unit can be tilted at an angle at which, even in a use mode in which the display is set in the horizontal direction or vertical direction, the display can be easily visualized.

This summary of the invention does not necessarily describe all necessary features so that the invention may also be a sub-combination of these described features.

The invention can be more fully understood from the following detailed description when taken in conjunction with the accompanying drawings, in which:
FIG. 1 is an exemplary perspective view of a portable information apparatus according to a first embodiment of the present invention;
FIG. 2 is an exemplary perspective view of the portable information apparatus showing a state in which a display unit is turned to a closed position in the first embodiment;
FIG. 3 is an exemplary perspective view of the portable information apparatus showing a use mode in which the display unit is reversed at a second position at 180 degrees, and an input surface is set in a vertical direction in the first embodiment;
FIG. 4 is an exemplary perspective view of the portable information apparatus showing a position relationship between a first tilt leg and a second tilt leg in the first embodiment;
FIG. 5 is an exemplary rear view of the portable information apparatus according to the first embodiment;
FIG. 6 is an exemplary side view of the portable information apparatus showing a state in which the display unit is turned to an open position in the first embodiment;
FIG. 7 is an exemplary side view of the portable information apparatus showing a use mode in which the input surface of the display unit is set in a horizontal direction in the first embodiment;
FIG. 8 is an exemplary side view of the portable information apparatus showing a use mode in which the input surface of the display unit is set in a vertical direction in the first embodiment;
FIG. 9 is an exemplary rear view of a portable information apparatus according to a second embodiment of the present invention;
FIG. 10 is an exemplary bottom view of a portable information apparatus according to the second embodiment;
FIG. 11 is an exemplary side view of the portable information apparatus showing a use mode in which an input surface of a display unit is et in a horizontal direction in the second embodiment; and
FIG. 12 is an exemplary bottom plan view of the portable information apparatus according to a third embodiment of the present invention.

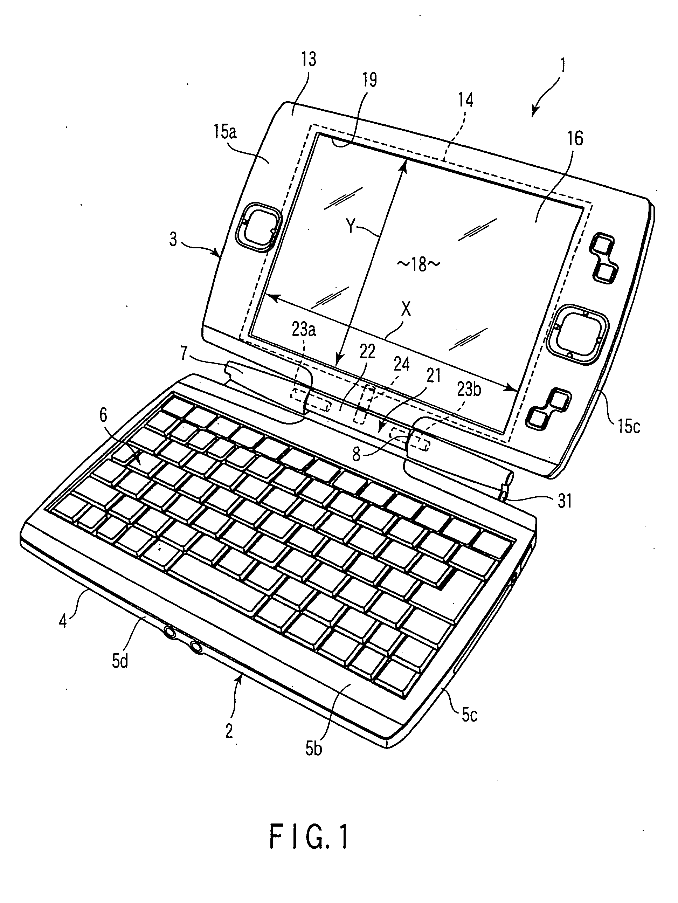

Hereinafter, a first embodiment of the present invention will be described with reference to FIGS. 1 to 8.

FIGS. 1 to 4 disclose a portable information apparatus 1 as an electronic apparatus. The portable information apparatus 1 comprises a main unit 2 and a display unit 3. The main unit 2 has a first housing 4 formed in a flat box shape. The first housing 4 houses a hard disk drive unit, a printed circuit board having a CPU mounted thereon and other various components.

The first housing 4 has a bottom wall 5a, a top wall 5b, left and right side walls 5c, a front wall 5d, and a rear wall 5e, and a keyboard 6 as an input device is disposed at the top wall 5b. A support portion 7 is formed at the rear end portion of the first housing 4. The support portion 7 is formed in a columnar shape extending in the widthwise direction of the first housing 4, and is overhung upward of the top wall 5b of the first housing 4. The support portion 7 is positioned rearwardly of the keyboard 6, and has a concave portion 8 at a central portion along the widthwise direction of the first housing 4.

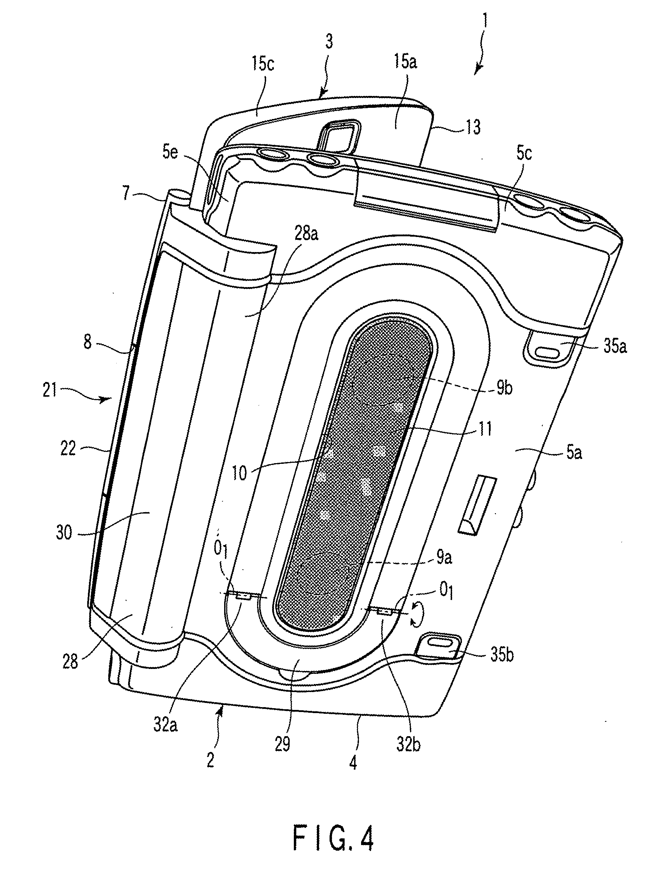

As shown in FIG. 4, the first housing 4 incorporates a pair of speakers 9a, and 9b. The speakers 9a and 9b are opposed to a sound output opening 10 positioned at the central portion of the bottom wall 5a. The opening 10 is formed in a slit shape along the depth direction of the first housing 4, and is covered with a net shaped speaker cover 11.

The display unit 3 comprises a second housing 13 and a liquid crystal display panel 14. The second housing 13 is formed in a flat box shape that is substantially equal in size to the first housing 4. The second housing 13 has a front wall 15a, a rear wall 15b and four peripheral walls 15c.

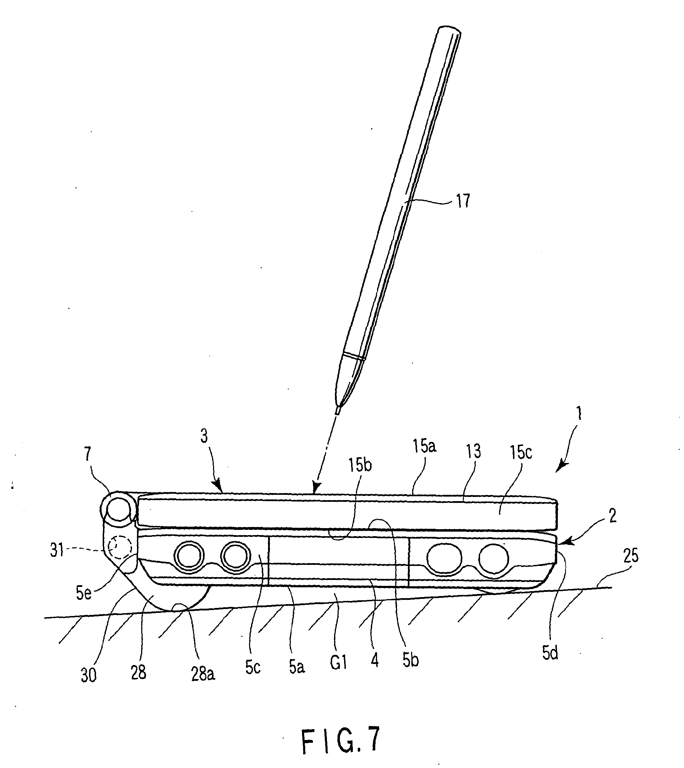

The liquid crystal display panel 14 is housed in the second housing 13, and its display screen is covered with a transparent tablet 16. The tablet 16 has an input surface 18 for executing input operation by using a stylus pen 17 (see Figure 7). The input surface 18 is superimposed on the display screen of the liquid crystal display panel 14, and the display screen may be visualized transparently through the input surface 18. Thus, the display screen of the liquid crystal display panel 14 is compatible with the input surface 18, and the input surface 18 is exposed outwardly of the second housing 13 through an opening 19 formed on the front wall 15a of the second housing 13.

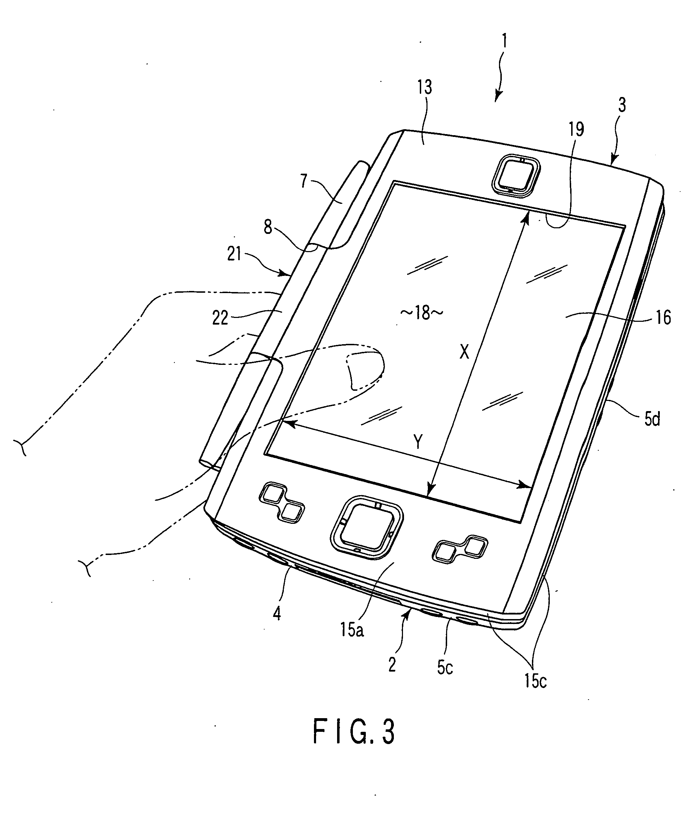

As shown in FIGS. 1 and 3, the input surface 18 is formed in a rectangular shape having a long axis X and a short axis Y. The long axis X of the input surface 18 extends along the widthwise direction of the second housing 13, and extends to the short axis Y of the input surface 18 along the depth direction of the second housing 13.

The second housing 13 is linked with the support portion 7 of the first housing 4 via a hinge unit 21. The hinge unit 21 comprises a hinge body 22, a pair of hinge axes 23a and 23b, collectively operating as a horizontal axis, and a second hinge axis 24 as a vertical axis. The hinge body 22 is formed in a columnar shape, and pivotally fits into the concave portion 8 of the support portion 7. The hinge body 22 and support portion 7 are coaxially arranged in one column each other along the widthwise direction of the first housing 4.

The first hinge axes 23a and 23b encompass between both ends along the axial direction of the hinge body 22 and the support portion 7. The first hinge axes 23a and 23b are formed in a coaxial shape with each other, and extend along the widthwise direction of the first housing 4. Thus, the first hinge axes 23a and 23b pivotally support the hinge body 22 on the first housing 4 at an angle which is substantially equal to 180 degrees.

The second hinge axis 24 encompasses between a central portion along the axial direction of the hinge body 22 and the second housing 13. The second hinge axis 24 extends in a direction orthogonal to the first hinge axes 23a and 23b. Thus, the second hinge axis 24 supports the second housing 13 on the hinge body 22 such that the housing 13 may be reversed at an angle, which is substantially equal to 180 degrees.

From the foregoing, the hinge unit 21 supports the display unit 3 on the main unit 2 pivotally between a closed position and an open position. In addition, when the display unit 3 is set at the open position, the hinge unit 21 enables the display unit 3 on the main unit 2 to be reversibly rotated at an angle which is substantially equal to 180 degrees around the second hinge axis 24.

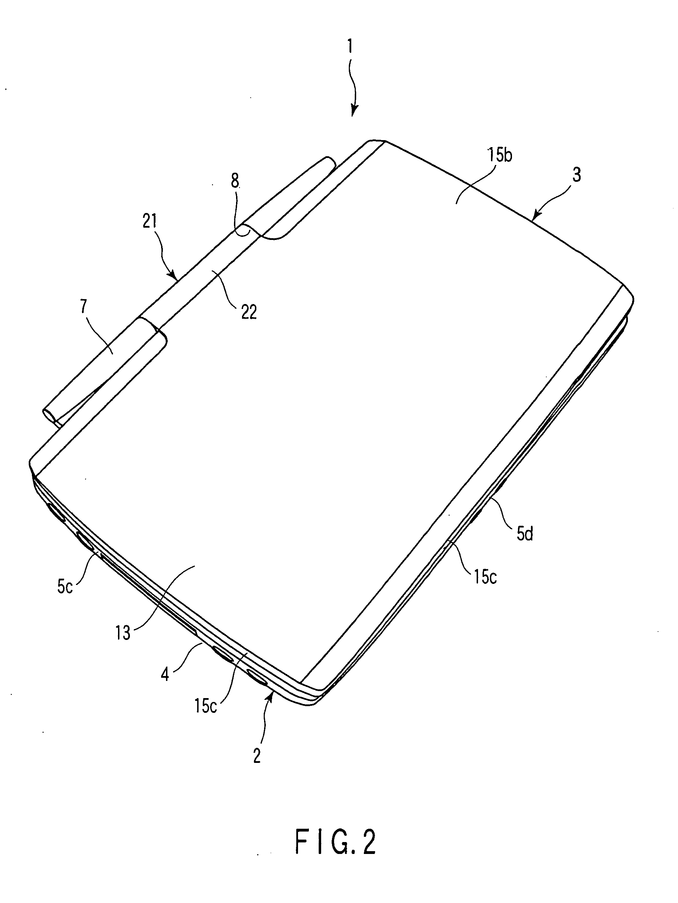

FIG. 2 discloses a state in which the display unit 3 is turned to the closed position, and FIG. 1 discloses a state in which the display unit 3 is turned to the open position. At the closed position, the second housing 13 of the display unit 3 lies on the first housing 4 of the main unit 2, and the front wall 15a of the second housing 13 is opposed to the top wall 5b of the first housing 4. Thus, the keyboard 6 and the input surface 18 of the tablet 16 are covered with the first and second housings 4, 13, and the portable information apparatus 1 is folded in a memo book shape.

At the open position, the display unit 3 is erected from the rear end portion of the main unit 2, and the keyboard 6 and the input surface 18 of the tablet 16 are exposed so as to be visualized from an operator. The display unit 3 is reversible in the range of an angle that is substantially equal to 180 degrees along the second hinge axis 24 when it is at the open position.

Thus, after the display unit 3 held at the open position has been reversed at 180 degrees around the second hinge axis 24, when the display unit 3 is turned toward the closed position, the display unit 3 lies on the main unit 2 in a posture in which the input surface 18 is set upwardly, as shown in FIG. 3. Then, the first housing 4 and the second housing 13 are integrated with each other.

Accordingly, the portable information apparatus 1 is folded in the memo book in a state in which the input surface 18 is positioned at the opposite side of the bottom wall 5a of the first housing 4 so that the input surface 18 is touched with the stylus pen 17, or alternatively, the stylus pen 17 is made close to the input surface 18, thereby making it possible to perform inputting by handwriting.

Furthermore, the portable information apparatus 1 of this type is designed in size such that an operator may hold the device by one hand. From this point, the portable information apparatus 1, like a general portable computer, may select either one of: a first use mode for turning the display unit 3 at the open position, thereby executing input operation with the keyboard 6; and a second use mode for reversing the display unit 3 in a posture in which the input surface 18 is set upwardly, thereby executing input operation by using the stylus pen 17.

In the second use mode, there are two implementations. The first implementation involves the portable information apparatus 1 being used in a posture in which the input surface 18 is set in the horizontal direction. The second implementation involves the portable information apparatus 1 being used in a posture in which the input surface 18 is set in the vertical direction.

In the implementation where the input surface 18 is set in the horizontal direction, the long axis X of the input surface 18 is horizontally placed, and the input surface 18 serves as a horizontally elongated screen. In the implementation where the input surface 18 is set in the vertical direction, the short axis Y of the input surface 18 is horizontally placed, and the input surface 18 serves as a vertically elongated screen.

As shown in FIGS. 4 to 6, the main unit 2 of the portable information apparatus 1 comprises a first tilt leg 28 and a second tilt leg 29. The first and second tilt legs 28 and 29 are intended to tilt the portable information apparatus 1 in a direction in which the frontal side of the input surface 18 is lowered in both of the cases in which the input surface 18 is set in the horizontal direction and the vertical direction when the portable information apparatus 1 is used to be placed on a placement surface 25 such as, for example, a tabletop of a desk.

As shown in FIG. 4, the first tilt leg 28 is formed integrally with a corner portion defined by the bottom wall 5a and rear wall 5e of the first housing 4, and is fixed to the first housing 4. The first tilt leg 28 extends along the widthwise direction of the first housing 4 at a position eccentric to one end side along the depth direction of the first housing 4, and is continuous to the support portion 7. In addition, the first tilt leg 28 is protruded from the bottom wall 5a and rear wall 5e of the first housing 4, and its protrusion end portion 28a is curved in an arc shape.

Thus, the first tilt leg 28 of the first embodiment is formed in a cylindrical shape such that an operator may hang the portable information apparatus 1 with fingertips when holding it by left hand, and is compatible with a function as a grip 30.

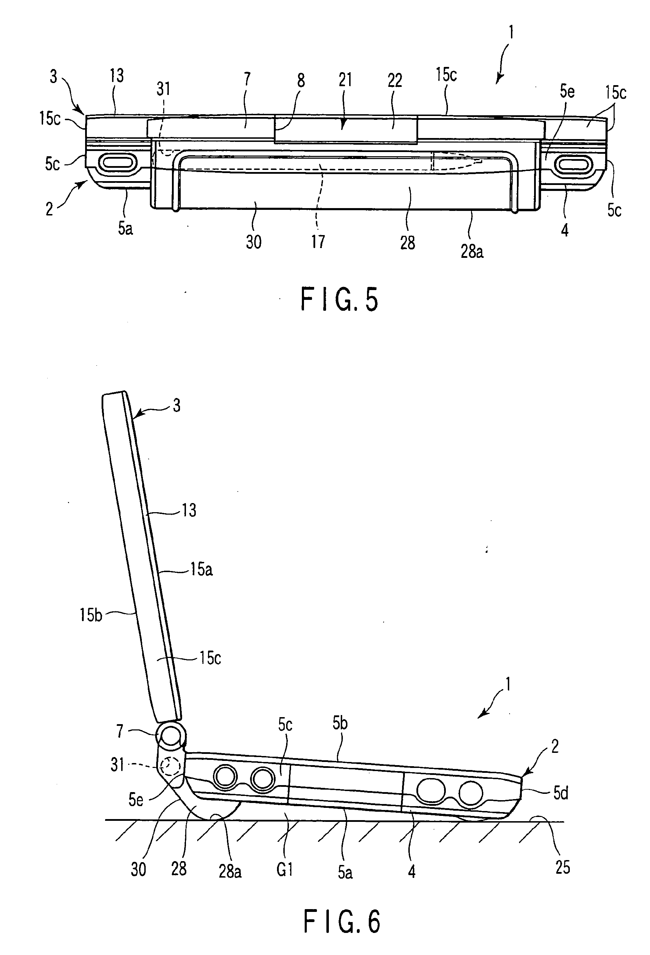

Further, the first tilt leg 28 houses a battery (not shown), and comprises a pen holder 31 for removably housing the stylus pen 17. The pen holder 31 extends along the widthwise direction of the first housing 4 as shown in FIG. 5, and opens at one side surface of the first tilt leg 28.

FIGS. 6 and 7 disclose a state in which the portable information apparatus 1 in the first and second use modes, respectively, is placed on the placement surface 25. In this state, the protrusive end portion 28a of the first tilt leg 28 protruded from the bottom wall 5a of the first housing 4 abuts against the placement surface 25, and a gap G1 is formed between the bottom wall 5a of the first housing 4 and the placement surface 25. With the presence of this gap G1, the speakers 9a and 9b are lifted from the placement surface 25, so that the sound output from the speakers 9a and 9b is released to the outer periphery of the portable information apparatus 1 through the gap G1.

As shown in FIG. 4, the second tilt leg 29 is set on the bottom wall 5a of the first housing 4. The second tilt leg 29 is set at a position eccentric to the right end portion of the first housing 4 at the central portion along the depth direction of the first housing 4. The second tilt leg 29 is formed in a U shape having first and second end portions 32a and 32b. The first and second end portions 32a and 32b are spaced from each other in the depth direction of the first housing 4, and are pivotally linked with the bottom wall 5a of the first housing 4, respectively. A turning axle O₁ of the second tilt leg 29 extends in the depth direction of the first housing 4.

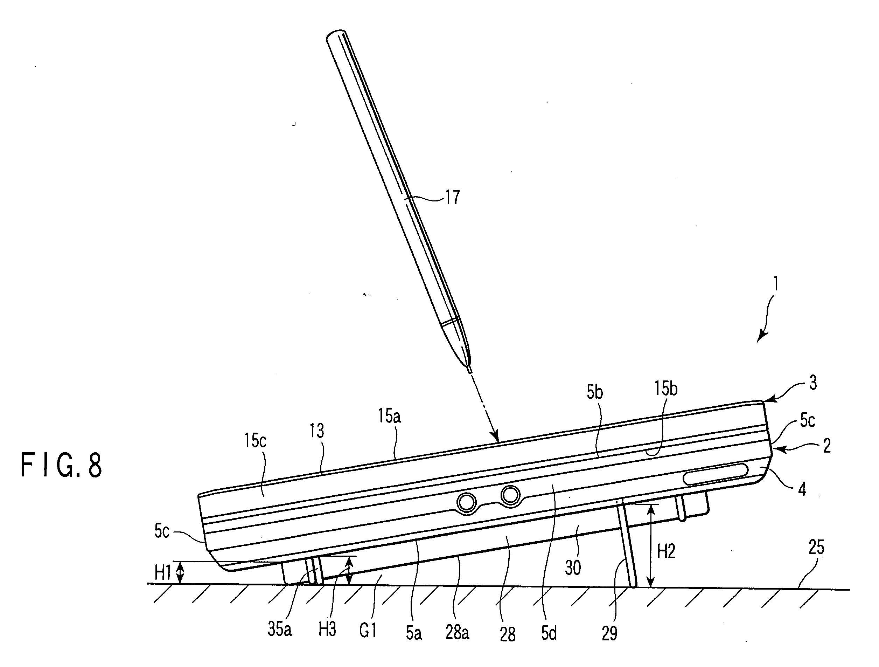

Thus, the second tilt leg 29 is adjusted between a use position shown in FIG. 8 and a storage position shown in FIG. 4 along the turning axle O₁. At the use position, the second tilt leg 28 is protruded from the bottom wall 5a of the first housing 4 so that a tip end of the second tilt leg 29 abuts against the placement surface 25. A protrusive height H2 of the second tilt leg 29 is greater than a protrusive height H1 of the first tilt leg 28.

At the storage position, the second tilt leg 29 is stored on the bottom wall 5a of the first housing 4 so as to be positioned on a face that is identical to the bottom wall 5a.

As shown in FIG. 4, first and second auxiliary legs 35a and 35b are set on the bottom wall 5a of the first housing 4. The first and second auxiliary legs 35a and 35b are positioned at the opposite side from the first tilt leg 28 with the second tilt leg 29 positioned therebetween. In other words, the first and second auxiliary legs 35a and 35b are spaced from each other in the widthwise direction of the first housing 4 at the front end portion of the bottom wall 5a. Thus, the first auxiliary leg 35a is spaced in the widthwise direction of the first housing 4 generally in closer proximity to speaker 9b than second auxiliary leg 35b, and the second auxiliary leg 35b is positioned generally proximate to the second t90ilt leg 29 and speaker 9a.

The first and second auxiliary legs 35a and 35b are pivotal (e.g., turnable), respectively, between a use position protruded from the bottom wall 5a and a storage position stored generally flush against the bottom wall 5a. A protrusive height H3 from the bottom wall 5a of the first and second auxiliary legs 35a and 35b is substantially equal to the protrusive height H1 of the first tilt leg 28.

From this sort of things, when the main unit 2 is placed on the placement surface 25, if the first and second auxiliary legs 35a and 35b are turned to the use position, the tip ends of these first and second auxiliary legs 35a and 35b and the protrusive end portion 28a of the first tilt leg 28 abut against the placement surface 25. In this manner, the main unit 2 is held on the placement surface 25 while it is maintained in a horizontal posture.

On the other hand, the first tilt leg 28 protrudes from the bottom wall 5a at a position shifted rearwardly of the first housing 4 relevant to the second tilt leg 29. Thus, when the second tilt leg 29 is used, if the first auxiliary leg 35a is turned to the use position, the protrusive end portion 28a of the first tilt leg 28 toward side wall 5c and opposite the second tilt leg 29, the tip end of the second tilt leg 29, and the tip end of the first auxiliary leg 35a, abut against the placement surface 25. Thus, the main unit 2 is maintained on the placement surface 25 without any occurrence of backlash.

In the portable information apparatus 1 having such a configuration, in the first use mode for executing input operation by using the keyboard 6, in a state in which the second tilt leg 29, the first auxiliary leg 35a, and the second auxiliary leg 35b are turned to the storage position, respectively, the main unit 2 is placed on the placement surface 25. In this manner, the protrusive end portion 28a of the first tilt leg 28 abuts against the placement surface 25 over its full length, and the front end portion of the bottom wall 5a of the first housing 4 abuts the placement surface 25. Thus, as shown in FIG. 6, the main unit 2 is tilted in a posture such that the frontal side of the keyboard 6 is lowered, and the operability of the keyboard 6 is improved.

On the other hand, in the second use mode for executing input operation by using the stylus pen 17, in order to use the input surface 18 in the horizontal direction, the main unit 2 is placed on the placement surface 25 in a state in which the second tilt leg 29, the first auxiliary leg 35a, and the second auxiliary leg 35b are turned to the storage positions, respectively. In this manner, the protrusive end portion 28a of the first tilt leg 28 abuts against the placement surface 25 over its full length, and the front end portion of the bottom wall 5a of the first housing 4 abuts against the placement surface 25.
As a result, as shown in FIG. 7, the main unit 2 and the display unit 3 superimposed on this main unit 2 are tilted in a posture such that the frontal side of the input surface 18 is lowered, and the input surface 18 may be easily visualized.

Further, in the second use mode, in order to use the input surface 18 as, for example, a viewer by setting it in the vertical direction, the main unit 2 is placed on the placement surface 25 in a state in which the second tilt leg 29 and the first auxiliary leg 35a are turned to the use positions, respectively. In this manner, the protrusive end portion 28a of the first tilt leg 28 at the opposite side of the second tilt leg 29, the tip end of the second tilt leg 29, and the tip end of the first auxiliary leg 35a, abut against the placement surface 25. As a result, as shown in FIG. 8, the main unit 2 and the display unit 3 superimposed on this main unit 2 are tilted in a posture such that the frontal side of the input surface 18 is lowered, and the input surface 18 may be easily visualized.

Therefore, according to the above-described configuration, in the case where the portable information apparatus 1 is used while the input surface 18 is set in the horizontal direction, the input surface 18 is tilted by using the first tilt leg 28. Further, in the case where the portable information apparatus 1 is used while the input surface 18 is set in the vertical direction, the input surface 18 is tilted by using the second tilt leg 29 and the first auxiliary leg 35a.

Thus, it is possible to use the first tilt leg 28 and the second tilt leg 29 according to the orientation of the input surface 18. In both of the case where the input surface 18 is set in the horizontal direction and the case where the input surface 18 is set in the vertical direction, the input surface 18 may be tilted at an angle at which the input surface 18 may be easily visualized.

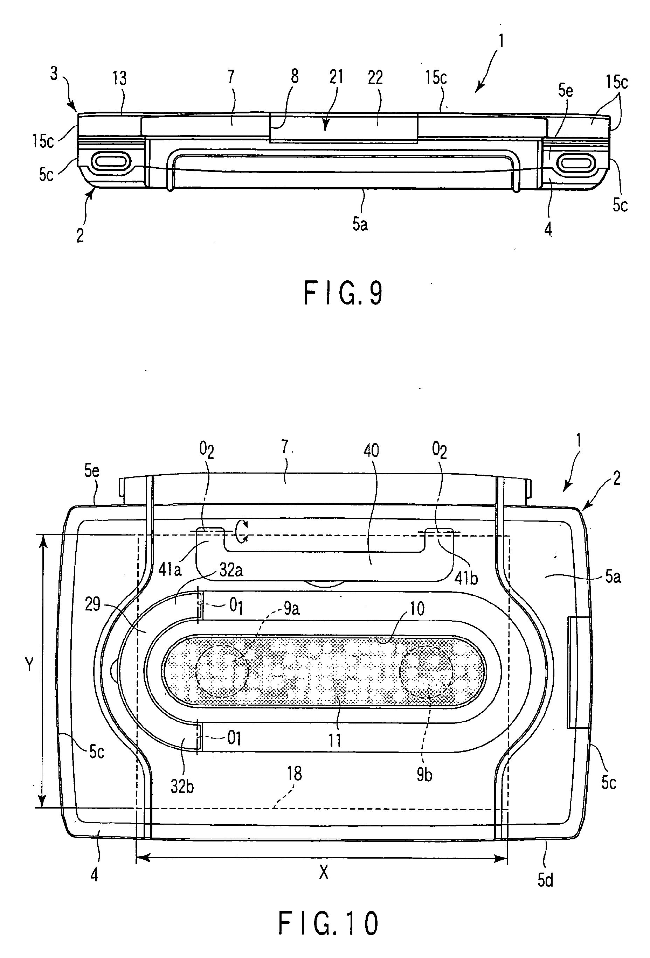

The present invention is not limited to the above-described first embodiment, and FIGS. 9 to 11 show a second embodiment of the present invention.

This second embodiment is different from the above-described first embodiment in configuration of a first tilt leg 40, and the other constituent elements of the portable information apparatus 1 are identical to those of the first embodiment.

As shown in FIG. 10, the first tilt leg 40 is set on the bottom wall 5a of the first housing 4.
The first tilt leg 40 is set at a position eccentric to the rear wall 5e, and substantially extends along the widthwise direction of the first housing 4.
The first tilt leg 40 has first and second end portions 41a and 41b, which are spaced from each other in the widthwise direction of the first housing 4. The first and second end portions 41a and 41b are pivotally linked with the bottom wall 5a of the first housing 4, respectively. A turning axle O₂ of the first tilt leg 40 extends in the widthwise direction of the first housing 4.

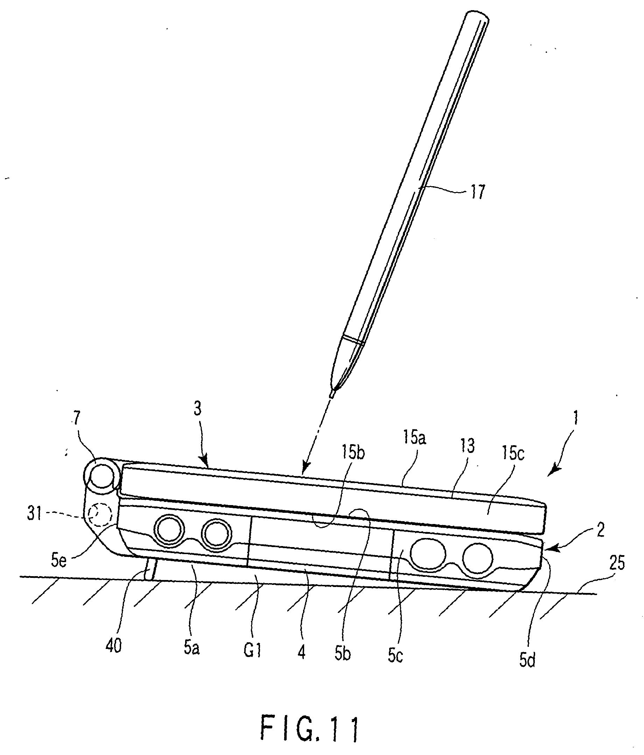

Thus, the first tilt leg 40 is turnable between a use position shown in FIG. 11 and a storage position shown in FIG. 10. At the use position, the first tilt leg 40 protrudes from the bottom wall 5a of the first housing 4 so that the protrusive end of the first tilt leg 40 abuts against the placement surface 25.
In addition, at the storage position, the first tilt leg 40 is stored on the bottom wall 5a of the first housing 4 so as to be positioned on a face which is identical to the bottom wall 5a.

According to such a configuration, in the case where the portable information apparatus 1 is used while the input surface 18 is set in the horizontal direction, the first tilt leg 40 is turned to the use position, and the second tilt leg 29 is turned to the storage position. Further, in the case where the portable information apparatus 1 is used while the input surface 18 is set in the vertical direction, the first tilt leg 40 is turned to the storage position, and the second tilt leg 29 is turned to the use position. In this manner, the main unit 2 and the display unit 3 superimposed on this main unit 2 are tilted in a posture such that the frontal side of the input surface 18 is lowered in both of the cases where the input surface 18 is set in the horizontal direction and the vertical direction.

Therefore, as is the above-described first embodiment, it is possible to use the first tilt leg 40 and the second tilt leg 29 according to the orientation of the input surface 18, and the input surface 18 may be tilted at an angle such that the input surface 18 may be easily visualized.

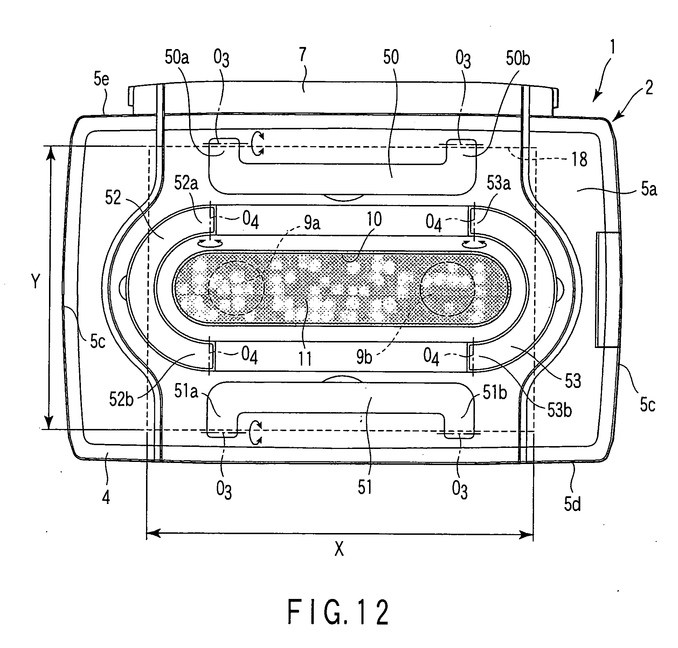

FIG. 12 discloses a third embodiment of the present invention.

In the third embodiment, a pair of first tilt legs 50 and 51 and a pair of second tilt legs 52 and 53 are set on the bottom wall 5a of the first housing 4. The first tilt legs 50 and 51 are disposed to be spaced from each other in the depth direction of the first housing 4 between which the speaker cover 11 is sandwiched, and extend along the widthwise direction of the first housing 4, respectively. The first tilt legs 50 and 51 have first and second end portions 50a, 50b, and 51a, 51b spaced from each other in the widthwise direction of the first housing 4, respectively. These first and second end portions 50a, 50b, and 51a, 51b are pivotally linked with the bottom wall 5a of the first housing 4, respectively. A turning axle O₃ of the first tilt legs 50 and 51 extends in the widthwise direction of the first housing 4.

Thus, the first tilt legs 50 and 51 are turnable between a use position and a storage position around the turning axle O₃. At the use position, the first tilt legs 50 and 51 protrude from the bottom wall 5a of the first housing 4, and the protrusive ends of these first tilt legs 50 and 51 abut against the placement surface 25. In addition, at the storage position, the first tilt legs 50 and 51 are stored on the bottom wall 5a of the first housing 4 so as to be positioned on a face that is identical to this bottom wall 5a.

On the other hand, second tilt legs 52 and 53 are disposed to be spaced from each other in the widthwise direction of the first housing 4 between which the speaker cover 11 is sandwiched. The second tilt legs 52 and 53 are formed in a U shape having first and second end portions 52a, 52b, and 53a, 53b, respectively. The first and second end portions 52a and 52b of the second tilt leg 52 at one side and the second end portions 53a and 53b of the second tilt leg 53 at the other side are spaced from each other in the depth direction of the first housing 4, respectively, and are pivotally linked with the bottom wall 5a of the first housing 4. A turning axle O₄ of the second tilt legs 52 and 53 extend in the depth direction of the first housing 4.

Thus, the second tilt legs 52 and 53 are turnable between a use position and a storage position around the turning axle O₄. At the use position, the second tilt legs 52 and 53 protrude from the bottom wall 5a of the first housing 4, and the protrusive ends of these second tilt legs 52 and 53 abut against the placement surface 25. In addition, at the storage position, the second tilt legs 52 and 53 are stored on the bottom wall 5a of the first housing 4 so as to be positioned generally flush against the bottom wall 5a.

According to such a configuration, in the case where the portable information apparatus 1 is used while the input surface 18 is set in a horizontal direction, either of the first and second tit legs 50 and 51 is turned to the use position, and the second tilt legs 52 and 53 are turned to the storage position. Further, in the case where the portable information apparatus 1 is used while the input surface 18 is set in the vertical direction, the first tilt legs 50 and 51 are turned to the storage position, and either of the second tilt legs 52 and 53 is turned to the use position.

In this manner, the main unit 2 and the display unit 3 superimposed on this main unit 2 are tilted in a posture such that the frontal side of the input surface 18 is lowered in both of the cases in which the input surface 18 is set in the horizontal and vertical directions.

Therefore, it is possible to use the first tilt legs 50 and 51 and the second tilt legs 52 and 53 according to the orientation of the input surface 18, and the input surface 18 may be tilted at an angle such that the input surface 18 may be easily visualized.

Further, in the present embodiment, at least one of the first tilt legs 50, 51 and the second tilt legs 52, 53 are selected and are turned to the use position, whereby the input surface 18 may be tilted in all of the four directions, and its usability is improved.

The electronic apparatus according to the present invention is not specified for a portable information apparatus, and may be carried out similarly even for a portable computer of Japanese standardized B5 size, for example.

Further, the input surface may be formed in a square shape, for example, without being limited to the rectangular shape.

## Claims

1. An electronic apparatus **characterized by** comprising:
a display (3) adapted for use in both a horizontal direction and a vertical direction;
a main unit (2) coupled to the display (3), the main unit (2) including a bottom wall (5a);
a first tilt leg (28) fixed to the bottom wall (5a), the position of the first tilt leg (28) being eccentric to a rear wall (5e) when the display (3) is used in the horizontal direction; and
a second tilt leg (29) pivotally coupled to the bottom wall (5a) and adapted to either a use position protruded from the bottom wall (5a) or a storage position stored in the bottom wall (5a), the second tilt leg (29), when pivoted, protruding to elevate a first peripheral wall (15c) of the display (3) in the vertical direction higher than a second peripheral wall (15c) situated opposite the first peripheral wall (15c).

2. An electronic apparatus according to claim 1, **characterized in that** the display (3) is formed in a rectangular shape having a long axis (X) along a widthwise direction of the main unit (2) and a short axis (Y) along a depth direction of the main unit (2).

3. An electronic apparatus according to claim 2, **characterized in that** the long axis (X) of the display (3) is horizontally placed when the display (3) is used in the horizontal direction, and the short axis (Y) of the display (3) is horizontally placed when the display (3) is used in the vertical direction.

4. An electronic apparatus according to claim 1, **characterized in that** the first tilt leg (28) is compatible with a grip (30).

5. An electronic apparatus according to claim 1, **characterized in that** the second tilt leg (29) is situated at a position eccentric to an end portion of the wall (5a) of the main unit (2) along the widthwise direction and at a central position along the depth direction.

6. An electronic apparatus according to claim 5, **characterized by** further comprising an auxiliary leg (35a, 35b) pivotally coupled to the bottom wall (5a) at a position eccentric to a front wall (5d), the auxiliary leg (35a, 35b) is pivotal between a use position protruded from the bottom wall (5a) and a storage position stored in the bottom wall (5a).

7. An electronic apparatus according to claim 6, **characterized in that** the protrusion heights of the auxiliary leg (35a, 35b) from the bottom wall (5a) is substantially equal to that of the first tilt leg (28).

8. An electronic apparatus according to claim 1, **characterized by** further comprising a speaker (9a, 9b) arranged in the main unit (2), which outputs sound through the bottom wall (5a), the first tilt leg (28) provides a gap (G1) for releasing a sound output from the speaker (9a, 9b) between the bottom wall (5a) and a placement surface (25) when the main unit (2) is placed on the placement surface (25):
